# EUROPEAN PATENT APPLICATION

(11) **EP 4 539 295 A1**
(43) Date of publication of application: **16.04.2025**
(21) Application number: 24199635.4
(22) Date of filing: 11.09.2024
(51) Int. Cl.: H02J 7/00

(54) **ACTIVE EQUALIZATION CONTROL SYSTEM AND ACTIVE EQUALIZATION CONTROL METHOD**

(30) Priority: 13.10.2023 CN 202322763460 U; 13.10.2023 CN 202311333063; 03.04.2024 WO PCT/CN2024/085851
(71) Applicant: Eve Energy Co., Ltd., Huizhou, Guangdong 516006 (CN)
(72) Inventor: YU, Changcheng, Huizhou, Guangdong, 516006 (CN)
(74) Representative: Murgitroyd & Company

(57) **Abstract**

The present application relates to an active equalization control system and an active equalization control method. The active equalization control system includes a sampling circuit; a processor configured to generate a battery selection signal and a target pulse width modulation signal; and an active equalization circuit. The active equalization circuit includes a battery selection circuit configured to select two target batteries (BAT1, BAT2) to perform voltage equalization according to the battery selection signal; and a power conversion circuit configured to equalize voltages of the two target batteries (BAT1, BAT2) according to the target pulse width modulation signal.

## Description

### TECHNICAL FIELD

The present application relates to a technical field of batteries, and more particularly, to an active equalization control system and an active equalization control method.

### BACKGROUND

In a field of batteries, a voltage balance between respective groups of batteries is mainly realized by active equalization or passive equalization control strategies. In the passive equalization control strategy, a voltage of a high-voltage battery is reduced by consuming the energy of the high-voltage battery, and thus this strategy causes a waste of the energy of the battery. In the active equalization control strategy, the energy of the high-voltage battery is transferred to a low voltage battery, to avoid the waste of the energy of the battery. Further, the active equalization control strategy may be divided into a quarantine-type strategy and a non-quarantine-type strategy. A system used for the non-quarantine-type strategy is relatively more simple, but the operation safety thereof is lower. A system used for the quarantine-type strategy is more complex and requires multi-level control. In both the quarantine-type strategy and the non-quarantine-type strategy, direct voltage equalization between any ones of the batteries cannot be realized, and the voltage of the battery needs to be continuously detected and closed-loop control is required.

In the related art, an increasing demand for battery capacity results in an increasing number of batteries in series, and therefore an equalization demand for battery becomes higher. However, conventional equalization circuits either waste battery energy or require a multi-level structure, levels of an entire system thereof are more complex, and voltage equalization between any ones of the batteries cannot be realized, and there is a need for an equalization system that is simple to control and can realize voltage equalization between any ones of the batteries.

### Technical problem

In view of the above, the present application provides an active equalization control system and an active equalization control method to address the above problems.

### Technical Solutions

According to a first aspect, some embodiments of the present application provide an active equalization control system including a battery module and an active equalizer electrically connected to the battery module, the battery module includes a plurality of batteries, and the active equalizer includes: a sampling circuit electrically connected to the plurality of batteries and configured to collect a plurality of analog voltages of the plurality of batteries; a processor electrically connected to the sampling circuit and configured to convert the plurality of analog voltages received into a plurality of digital voltages, and generate a battery selection signal and a target pulse width modulation signal according to the plurality of digital voltages; and an active equalization circuit electrically connected to the processor, wherein the active equalization circuit includes: a battery selection circuit electrically connected to the plurality of batteries and configured to select two target batteries for voltage equalization among the plurality of batteries according to the battery selection signal; and a power conversion circuit electrically connected to the processor and the two target batteries, wherein the power conversion circuit is provided with at least four transistors and configured to equalize voltages of the two target batteries according to the target pulse width modulation signal.

According to a second aspect, some embodiments of the present application provide an active equalization control method. The active equalization control method is applied to the active equalization control system, and the active equalization control method includes: obtaining the plurality of analog voltages of the plurality of batteries collected by the sampling circuit; converting the plurality of analog voltages received into the plurality of digital voltages, and generating the battery selection signal and the target pulse width modulation signal according to the plurality of digital voltages; transmitting the battery selection signal to the battery selection circuit so that the battery selection circuit selects the two target batteries for the voltage equalization among the plurality of batteries according to the battery selection signal; and transmitting the target pulse width modulation signal to the power conversion circuit so that the power conversion circuit equalizes the voltages of the two target batteries.

### Beneficial Effects

By providing the battery selection circuit and the active equalization circuit, direct charging and discharging between any two batteries in the plurality of batteries may be realized according to embodiments of the present application, while active equalization does not require real-time sampling of the voltage of the battery, closed-loop control is not required, the design is simpler, the cost is lower, and the system flexibility is improved.

### BRIEF DESCRIPTION OF THE DRAWINGS

FIG. 1 shows a schematic block diagram of an active equalization control system according to some embodiments of the present application.
FIG. 2 shows an architecture diagram of an active equalization control system according to some embodiments of the present application.
FIG. 3 shows a schematic diagram of a sampling circuit and an analog selector according to some embodiments of the present application.
FIG. 4 shows a schematic diagram of a battery selection circuit according to some embodiments of the present application.
FIG. 5 shows a schematic diagram of a power conversion circuit according to some embodiments of the present application.
FIG. 6 shows a schematic diagram of current flow when a first transistor of according to some embodiments of the present application is turned on.
FIG. 7 shows a waveform diagram of a first bus side according to some embodiments of the present application.
FIG. 8 shows a schematic diagram of current flow when a second transistor according to some embodiments of the present application is turned on.
FIG. 9 shows a waveform diagram of a second bus side according to some embodiments of the present application.
FIG. 10 is a schematic diagram of an interlock circuit according to some embodiments of the present application.
FIG. 11 shows a flowchart of an active equalization control method according to some embodiments of the present application.

### DETAILED DESCRIPTION

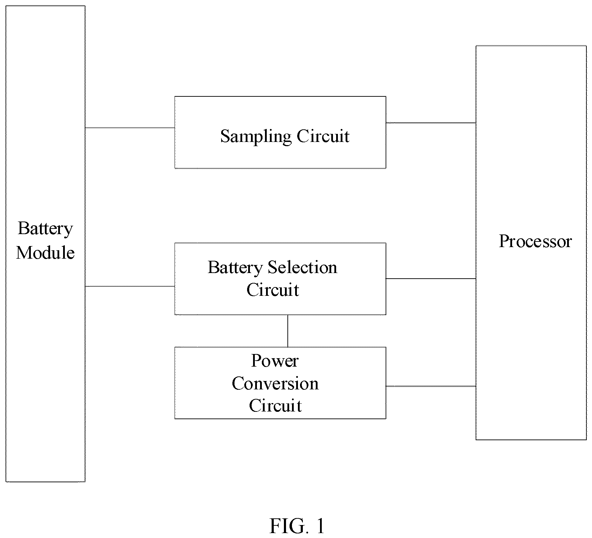

FIG. 1 shows a schematic block diagram of an active equalization control system according to some embodiments of the present application. As shown in FIG. 1, the active equalization system includes a battery module and an active equalizer electrically connected to the battery module. The battery module may include a plurality of batteries arranged in an array, and the active equalizers are respectively electrically connected to the plurality of batteries, to equalize energy of the plurality of batteries.

Referring to FIG. 1, the active equalizer includes a sampling circuit, a processor, and an active equalization circuit. The sampling circuit may be electrically connected to more than one of the plurality of batteries. The sampling circuit is configured to collect a plurality of analog voltages of the more than one batteries. The processor may be electrically connected to the sampling circuit. The processor is configured to convert the plurality of received analog voltages into a plurality of digital voltages, and generate a battery selection signal and a target pulse width modulation signal according to the plurality of digital voltages. The active equalization circuit may be electrically connected to the processor, and the active equalization circuit may equalize voltages of the more than one batteries according to the battery selection signal and the target pulse width modulation signal.

In some embodiment, the processor is a control core of the entire active equalization control system, and the processor is mainly configured to perform processing of collected data, control of energy scheduling of the active equalization circuit, and data communication with external elements.

For example, the processor has a maximum operating frequency of 168MHz and is provided with eighty-two I/O ports, four USARTs, two UARTs, three I2Cs, three SPIs, and sixteen 12-bit ADCs.

The processing of the collected data mainly means analog-to-digital conversion performed on the voltage of each battery sampled by the sampling circuit to determine which two batteries need to perform energy scheduling. The active equalization circuit, when performing energy scheduling, is configured to connect the two batteries that need to perform the energy scheduling to a power conversion circuit, and then transfer the energy of a higher-energy battery to a lower-energy battery by controlling the power conversion circuit. The data communication circuit is configured to perform data interaction with one or more external elements. The input dry contact circuit is mainly configured to perform reception and processing of one or more signals from one or more external elements. The output dry contact circuit is configured to perform transmission and processing of one or more signals to one or more external elements.

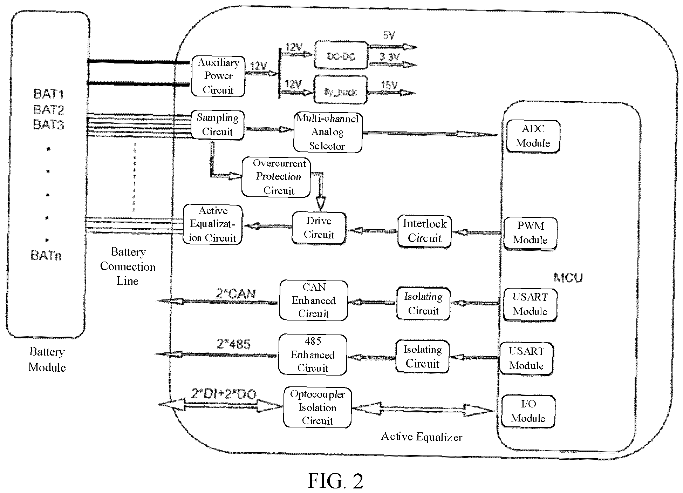

FIG. 2 shows an architecture diagram of an active equalization control system according to some embodiments of the present application. The architecture of the active equalization control system of FIG. 2 is more detailed than that of FIG. 1. Specific components of the active equalization control system will be described below in conjunction with FIG. 2, but it will be appreciated that the present application is not limited to the example of FIG. 2.

In some embodiment, as shown in FIG. 2, the battery module may include n batteries, i.e., a first battery BAT1, a second battery BAT2, a third battery BAT3, ..., an n-th battery BATn. Where n is a natural number. The sampling circuits may be electrically connected to each of the batteries, to collect voltages of the respective batteries.

Note that the sampling circuit is provided in the active equalizer in some embodiments of the present application, so that the active equalization control system operates independently of a battery management system (BMS) and may obtain the voltage of the battery without a sampling circuit in the BMS. Therefore, the sampling circuit is provided in the active equalization control system to obtain the voltage of a single battery. In practice, the active equalizer may be used in coordination with the battery management system. In this case, the sampling circuit of the active equalizer may be omitted when the active equalizer is in coordination with the battery management system, and the battery data is transmitted from the battery management system to the active equalizer through communication. It will be appreciated that in addition to collecting the voltage of the battery, other parameters of the battery, such as temperature, may be collected, and this application is not limited to collected specific parameters.

In some embodiment, as shown in FIG. 2, the processor (e.g., Micro-controller Unit (MCU)) is provided herein with an analog-to-digital conversion unit (e.g., an analog-to-digital converter (ADC) module). The active equalizer further includes an analog selector electrically connected to the sampling circuit and the analog-to-digital conversion unit. The analog selector may be a multi-channel analog selector configured to convert a plurality of received analog voltages into a plurality of digital voltages.

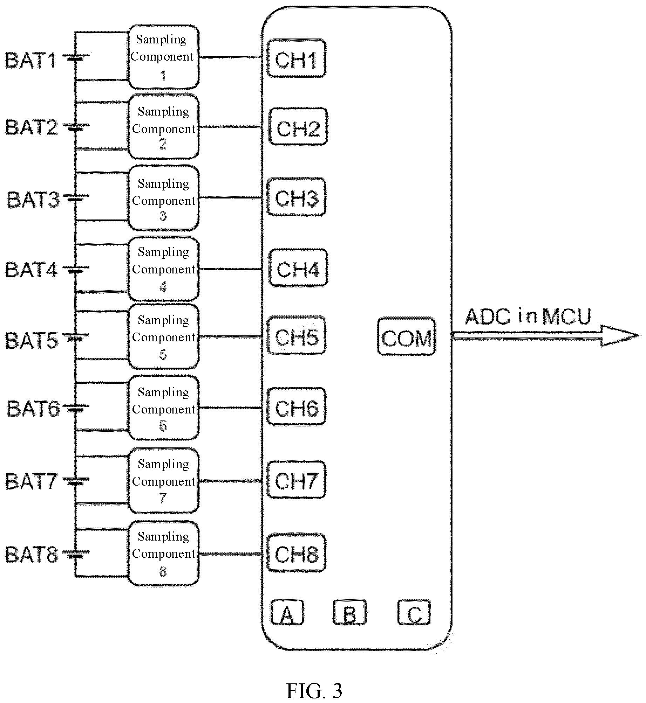

FIG. 3 shows a schematic diagram of a sampling circuit and an analog selector according to some embodiments of the present application.

In some embodiment, the sampling circuit may include a plurality of sampling components. Referring to FIG. 3, each of the sampling component is electrically connected to a positive electrode and a negative electrode of a corresponding one of the batteries to collect the voltage of the battery. For example, the sampling component 1 is electrically connected to the positive electrode and the negative electrode of the first battery BAT1, the sampling component 2 is electrically connected to the positive electrode and the negative electrode of the second battery BAT2, the sampling component 3 is electrically connected to the positive electrode and the negative electrode of the third battery BAT3, ... and so forth. The number of sampling components is equal to the number of batteries. Alternatively, the sampling component is implemented based on differential sampling of an operational amplifier to improve the sampling accuracy for the voltage of the battery.

In some embodiment, the plurality of sampling components are electrically connected to the analog selector. The analog selector is provided with a plurality of input channels and at least one output channel. Each of the input channels of the analog selector is electrically connected to a corresponding one of the sampling components, to receive the voltage of a single one of the batteries collected by the corresponding sampling component. The output channel is electrically connected to the analog-to-digital converter of the processor to output the voltage of the selected battery to the analog-to-digital converter in the processor for analog-to-digital conversion, thereby generating digitized voltage data.

Alternatively, taking FIG. 3 as an example, the analog selector is implemented by an one-out-of-eight analog selection chip provided with eight input channels CH1 to CH8 and one output channel COM, so that an ADC port may collect output data of eight sampling components. It will be appreciated by those skilled in the art that the number of input channels and the number of the output channels of the analog selector may be selected according to actual needs, and this application is not limited thereto.

At present, the greater the capacity of the current battery module, the more the number of ones of the batteries in series. In addition, the number of ports of the analog-to-digital converter of the processor is restricted. Therefore, it is not possible for each of the ports of the analog-to-digital converter to sample the voltage data of only one corresponding battery. Therefore, in the present application, the analog selector sends the sampling data from more than one channels to the port of the analog converter by time-division multiplexing, so that the voltage of the greater-capacity battery may be collected.

In some embodiment, referring to FIG. 2, the active equalizer further includes an auxiliary power circuit, and the auxiliary power circuit is electrically connected (Not shown) to the processor (for example, MCU in FIG. 2) and at least one of the batteries, to provide power for the processor. For example, the auxiliary power supply circuit obtains power from the battery, and then generates a total voltage of 12V through a flyback circuit. The total voltage of 12V may be converted to 5V and 3.3V through the DC-DC conversion to provide power for the processor, a driver chip, a logic chip, the operational amplifier, and the like. Alternatively, the total voltage of 12V may be converted to a voltage of 15V via the flyback circuit to provide a driving power supply for the metal oxide semiconductor (MOS) transistor. By using the auxiliary power supply circuit to supply power to the active equalization control system, the complexity of supplying power from the outside may be omitted, the energy of an existing battery may be fully used, and the utilization efficiency of the battery may be improved.

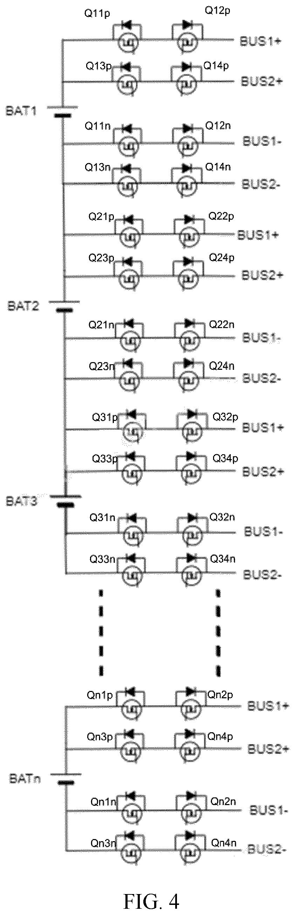

FIG. 4 shows a schematic diagram of a battery selection circuit according to some embodiments of the present application.

In some embodiment, the active equalization circuit includes a battery selection circuit electrically connected to the plurality of batteries and configured to select two target batteries for the voltage equalization among the plurality of batteries according to the battery selection signal.

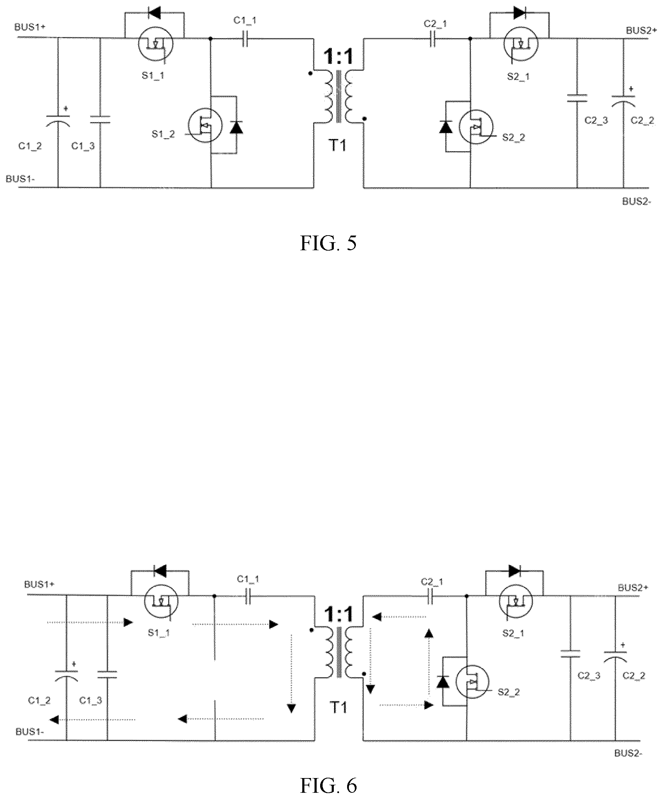

In some embodiment, the battery selection circuit includes a plurality of switching transistors (e.g., Q11p-Qn1p, Q12p-Qn2p, Q13p-Qn3p, Q14p-Qn4p, Q11n-Qn1n, Q12n-Qn2n, Q13n-Qn3n, Q14n-Qn4n in FIG. 4). For example, all transistors in FIG. 4 may be referred to as switching transistors of the present application. Note that although transistors in FIG. 5 may also function as a switch, the switching transistor of the present application is specifically the transistor of the battery selection circuit. The switching transistor may include an MOS transistor.

Referring to FIG. 4, each of the batteries may be electrically connected to a first positive bus BUS1+, a first negative bus BUS1-, a second positive bus BUS2+, and a second negative bus BUS2- by eight ones of the switching transistors. The first positive bus BUS1+ may be used as a positive terminal at an input side of the power conversion circuit, and the first negative bus BUS1-may be used as a negative terminal at the input side of the power conversion circuit. The second positive bus BUS2+ may be used as a positive terminal at the output side of the power conversion circuit, and the second negative bus BUS2- may be used as a negative terminal at the output side of the power conversion circuit.

At least one switching transistor is disposed between the battery and each of the first positive bus, the first negative bus, the second positive bus, and the second negative bus. For example, a switching transistor Q11p and a switching transistor Q12p are provided between the first positive bus BUS1+ and the positive electrode of the first battery BAT1, and a switching transistor Q11n and a switching transistor Q12n are provided between the first negative bus BUS1- and the negative electrode of the first battery BAT1.

A first terminal of the switching transistor Q11p and a first terminal of the switching transistor Q12p are both electrically connected to the processor. A second terminal of the switching transistor Q11p is electrically connected to a second terminal of the switching transistor Q12p. A third terminal of the switching transistor Q11p is electrically connected to the positive terminal of the first cell. A third terminal of the switching transistor Q12p is electrically connected to the first positive bus BUS1+. Therefore, at least two transistors may be provided between the electrode of each of the batteries and the corresponding bus, and the at least two transistors are arranged in a mirror symmetry and each transistor has a body diode, so that reverse connection of the battery may be prevented, thereby improving safety.

In some embodiment, the battery selection circuit is switched to control any battery to be connected or disconnected with power conversion circuit to achieve active voltage equalization. The battery selection circuit may realize the direct energy transfer between any two batteries, and may further reduce the cost and improve the flexibility of the system by emptying part of the switching transistors in the production process according to the actual production conditions.

FIG. 5 shows a schematic diagram of a power conversion circuit according to some embodiments of the present application. The active equalization circuit may further include a power conversion circuit. The power conversion circuit is electrically connected to the processor and the two target batteries, and the power conversion circuit is provided with at least four transistors and configured to equalize the voltages of the two target batteries according to the target pulse width modulation signal.

In some embodiment, the power conversion circuit includes a power input unit, a transformer, and a power output unit. The two target batteries include a first target battery and a second target battery. For example, the first target battery is the first battery BAT1, and the second target battery is the second battery BAT2.

In some embodiment, the power input unit is electrically connected to the first target battery, connected in series to a primary side of the transformer, and configured to generate a primary side voltage at the primary side of the transformer according to the target pulse width modulation signal. At least two transistors are arranged in the power input unit.

Referring to FIG. 5, the power input unit includes a first transistor S1_1, a second transistor S1_2, a first capacitor C1_1, a second capacitor C1_2, and a third capacitor C1_3. Each of the first transistor S1_1 and the second transistor S1_2 may include an MOS transistor.

A first terminal of the first transistor S1_1 is electrically connected to the processor, and a third terminal of the first transistor S1_1 is electrically connected to the first positive bus of the first target battery. A first terminal of the second transistor S1_2 is electrically connected to the processor, a second terminal of the second transistor S1_2 is electrically connected to the first negative bus of the first target battery, and a third terminal of the second transistor S1_2 is electrically connected to a second terminal of the first transistor S1_1. A first terminal of the first capacitor C1_1 is electrically connected to the second terminal of the first transistor S1_1, and a second terminal of the first capacitor C1_1 is electrically connected to the primary side of the transformer. A first terminal of the second capacitor C1_2 is electrically connected to the first positive bus, and a second terminal of the second capacitor C1_2 is electrically connected to the first negative bus. A first terminal of the third capacitor C1_3 is electrically connected to the first positive bus, and a second terminal of the third capacitor C1_3 is electrically connected to the first negative bus.

In some embodiment, the transformer T1 includes a primary side and a secondary side having a turn ratio of 1:1, and configured to generate a secondary side voltage according to the primary side voltage.

In some embodiment, the power output unit is electrically connected to the second target battery, connected in series to the secondary side of the transformer, and configured to charge the second target battery according to the secondary side voltage, to equalize the voltage of the second target battery and the voltage of the first target battery. At least two transistors are arranged in the power output unit. The transistor in the power output unit and the transistor in the power input unit are both electrically connected to the processor, and the transistor in the power output unit is different from the transistor in the power input unit.

Referring to FIG. 5, the power output unit includes a third transistor S2_1, a fourth transistor S2_2, a fourth capacitor C2_1, a fifth capacitor C2_2, and a sixth capacitor C2_3. Each of the third transistor S2_1 and the fourth transistor S2_2 may include an MOS transistor.

A first terminal of the third transistor S2_1 is electrically connected to the processor, and a third terminal of the third transistor S2_1 is electrically connected to the second positive bus of the second target battery. A first terminal of the fourth transistor S2_2 is electrically connected to the processor, a second terminal of the fourth transistor S2_2 is electrically connected to the second negative bus of the second target battery, and a third terminal of the fourth transistor S2_2 is electrically connected to a second terminal of the third transistor S2_1. A first terminal of the fourth capacitor C2_1 is electrically connected to the second terminal of the third transistor S2_1, and a second terminal of the fourth capacitor C2_1 is electrically connected to the secondary side of the transformer. A first terminal of the fifth capacitor C2_2 is electrically connected to the second positive bus, and a second terminal of the fifth capacitor C2_2 is electrically connected to the second negative bus. A first terminal of the sixth capacitor C2_3 is electrically connected to the second positive bus, and a second terminal of the sixth capacitor C2_3 is electrically connected to the second negative bus.

In some embodiment, the number of transistors in the power conversion circuit is four. Two ones of the transistors in the power input unit are electrically connected to the positive and negative electrodes of the first target battery, respectively, and the other two ones of the transistors in the power output unit are electrically connected to the positive and negative electrodes of the second target battery, respectively.

In operation, the processor receives the voltages of respective batteries collected by the sampling circuit, and determines which two ones of the batteries need to perform energy scheduling. For example, if it is assumed that the voltage of the first battery BAT1 is higher and the voltage of the second battery BAT2 is lower, the first battery BAT1 is required to charge the second battery BAT2.

Next, the four switching transistors connected to the first battery BAT1 are turned on, and the first battery BAT1 is connected to the buses BUS1. The four switching transistors connected to the second battery BAT2 are turned on, and the second battery BAT2 is connected to the buses BUS2. Alternatively, the four switching transistors connected to the first battery BAT1 are turned on, and the first battery BAT1 is connected to the buses BUS2. The four switching transistors connected to the second battery BAT2 are turned on, and the second battery BAT2 is connected to the buses BUS1.

If the first battery BAT1 is connected to the buses BUS1 and the second battery BAT2 is connected to the buses BUS2, the first and second transistors S1_1 and S1_2 of the power conversion circuit perform complementary high-frequency operation, the first transistor S1_1 has a duty ratio of 50%, and the third and fourth transistors S2_1 and S2_2 do not perform operation. Alternatively, if the first battery BAT1 is connected to the buses BUS2 and the second battery BAT2 is connected to the buses BUS1, in the power conversion circuit, the third and fourth transistors S2_1 and S2_2 perform complementary high-frequency operation, the third transistor S2_1 has a duty ratio of 50%, and the first and second transistors S1_1 and S1_2 do not perform operation.

Finally, the voltage of the first battery BAT1 is same as that of the second battery BAT2. During the process, it is not necessary for the software to monitor the voltage of the battery all the time, and it is not necessary for the closed-loop control. Only a pulse width modulation (PWM) wave with the duty ratio of 50% is needed. That is, in some embodiments of the present application, automatic voltage equalization between the batteries may be realized by an open loop without keeping detecting the voltage of the battery.

Further, for example, the first battery BAT1 is connected to the buses BUS1, the second battery BAT2 is connected to the buses BUS2, of the first battery BAT1 has a voltage VCC1, and the second battery BAT2 has a voltage VCC2, where VCC1>VCC2. Due to the complementary switching operation of the transistors S1_1 and S1_2 with the duty ratio of 50% (i.e., when the transistor S1_1 is turned on, the transistor S1_2 is turned off; when the transistor S1_1 is turned off, the transistor S1_2 is turned on), a voltage waveform between source and drain of the transistor S1_2 is a square wave with an amplitude of VCC1 and a duty ratio of 50% (i.e., the voltage of the first battery BAT1 is chopped into the square wave with the amplitude of VCC1 and the duty ratio of 50%). The square wave may be divided into a direct current (DC) voltage of VCC1/2 and an alternating current (AC) voltage of VCC1/2. Since the capacitor C1_1 may be configured to allow AC current to pass through but prevent DC current from flowing, the DC voltage is entirely across the capacitor C1_1, and the AC voltage is across the primary side of the high-frequency transformer. Since the alternating voltage can pass through the transformer and the ratio of the turns of the transformer is 1: 1, the secondary side of the transformer is also an alternating voltage with an amplitude of VCC1/2. Due to the bootstrap effect of the capacitor C2_1, the voltage across the capacitor C2_3 is a voltage of VCC1, so that the charging on the second battery BAT2 is realized. As a result, the voltage of the first battery BAT1 is same as that of the second battery BAT2. During the process, it is not necessary for the software to monitor the voltage of the battery all the time, and it is not necessary for the closed-loop control.

In some embodiment, the ratio of turns of the primary side to turns of the secondary side is 1:1. The transformer plays an isolating role, enabling the power conversion circuit to realize bidirectional isolated charging and discharging, thus realizing direct energy scheduling between any two batteries. At the same time, isolated topology is used to effectively guarantee the safety and reliability of the system. The transformer is only responsible for energy transfer and does not store energy, thus an additional air gap is not required.

FIG. 6 shows a schematic diagram of current flow when a first transistor of according to some embodiments of the present application is turned on.

Referring to FIG. 6, when the first transistor S1_1 is turned on, the current flow direction is the positive electrode of the first battery BAT1 → the first transistor S1_1 → the capacitor C1_1 → the primary side of the transformer T1 → the negative electrode of the first battery BAT1 → the positive electrode of the first battery BAT1. From the principle of the operation of the transformer with homonymous terminals, the current flow direction of the operation current of the secondary side circuit is the secondary side of the transformer T1 →the body diode of the fourth transistor S2_2 → the capacitor C2_1→ the transformer T1.

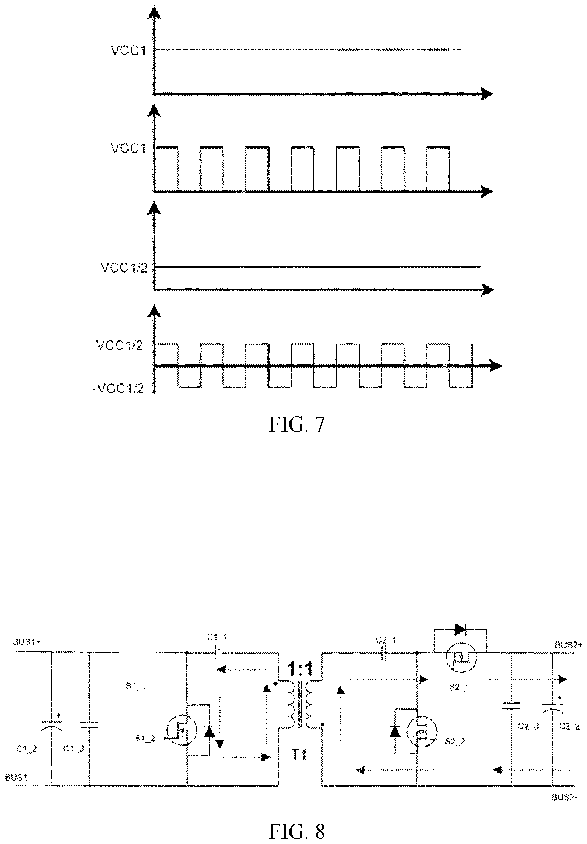

FIG. 7 shows a waveform diagram of a first bus side according to some embodiments of the present application.

Referring to FIG. 7, in the voltage equalization process, VCC1 represents the voltage value of the first battery BAT1. The voltage waveforms from the top to the bottom respectively represents: a voltage waveform of the voltage across the capacitor C1_2, a voltage waveform of the voltage across the source and the drain of the second transistor S1_2, a voltage waveform of the voltage across both sides of the capacitor C1_1, and a voltage waveform of the voltage across the primary side of the transformer T1.

FIG. 8 shows a schematic diagram of current flow when a second transistor according to some embodiments of the present application is turned on.

Referring to FIG. 8, when the first transistor S1_1 is turned off, the current flow direction is the capacitor C1_1 → the second transistor S1_2→the primary side of the transformer T1 →the capacitor C1_1. In this case, the current flow direction of the operation current of the secondary side circuit is the secondary side of the transformer T1 → the capacitor C2_1 →the third transistor S2_2→the anode electrode of the second battery BAT2 →the cathode electrode of the second battery BAT2 → the secondary side of the transformer T1.

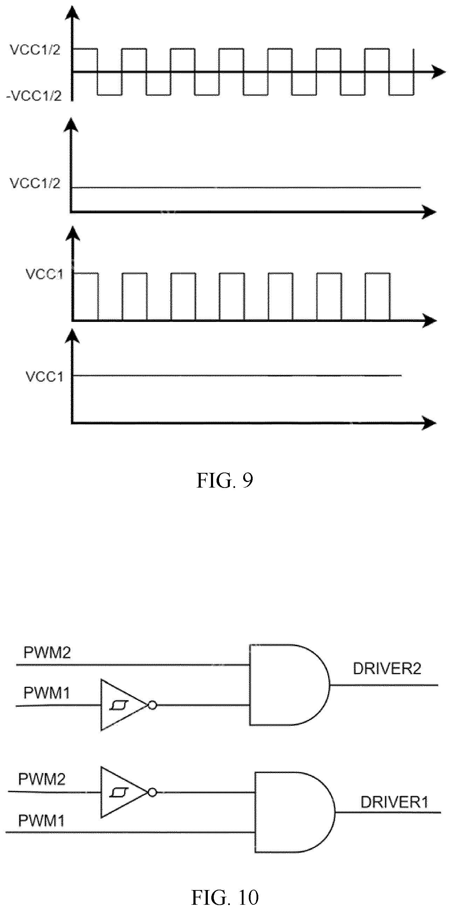

FIG. 9 shows a waveform diagram of a second bus side according to some embodiments of the present application.

Referring to FIG. 9, in the voltage equalization process, waveforms at second bus side BUS2 from the top to the bottom respectively represents: a voltage waveform of the voltage across the primary side of the transformer T1, a voltage waveform of the voltage across the capacitor C2_1, a voltage waveform of the voltage across the source and the drain of the transistor S2_2, and a voltage waveform of the voltage across both sides of the capacitor C2_2.

In some embodiment, the processor is provided with a pulse width modulation (PWM) unit configured to generate the target pulse width modulation signal. The active equalizer further includes an interlock circuit electrically connected to the pulse width modulation unit, to prevent shoot-through of the plurality of transistors of the power conversion circuit.

FIG. 10 is a schematic diagram of an interlock circuit according to some embodiments of the present application. The interlock circuit is configured to protect an upper MOS transistor and a lower MOS transistor at both sides of the transformer of the power conversion circuit, to prevent the shoot-through of the upper and lower transistors. The upper MOS transistor may refer to the first transistor S1_1 in FIG. 5, and the lower MOS transistor may refer to the second transistor S1_2 in FIG. 5. PWM1 and PWM2 in Table 1 may refer to initial PWM signals, and a terminal DRIVER1 may be connected to the gate of the first transistor S1_1 in FIG. 5, and a terminal DRIVER2 may be connected to the gate of the second transistor S1_2 in FIG. 5. The operation principle of the interlock circuit is as follows: normally, a single PWM1 and a signal PWM2 are complementary PWM signals. When the signal PWM1 and the signal PWM2 both have a high level due to abnormal operation of the chip or other reasons, the terminal DRIVER1 and the terminal DRIVER2 both have a low level, so that the upper and lower transistors are not driven. Therefore, the shoot-through of the upper and lower transistors may be avoided. The truth table of the interlocking circuit is shown in the following table.

**Table 1 Truth table of the interlock circuit**

| PWM1 | PWM2 | DRIVER1 | DRIVER2 |
|---|---|---|---|
| 1 | 1 | 0 | 0 |
| 0 | 0 | 0 | 0 |
| 1 | 0 | 1 | 0 |
| 0 | 1 | 0 | 1 |

In some embodiment, the active equalizer may further include an over-current protection circuit, a drive circuit, and a communication circuit.

The over-current protection circuit directly blocks the power MOS transistor drive beyond the over-current protection value by sampling the charge-discharge current in real time and then comparing it with the over-current protection value, thereby protecting the entire system.

The battery selection circuit and the power conversion circuit switch select the MOSFET because the overall system voltage is lower, and the current is lower, so that the Surface Mounted Technology (SMT) MOS may be selected because the switching frequency of the MOS transistor is higher, which may effectively reduce the volume of the components of the power conversion circuit, thereby reducing the volume of the overall system. The MOS transistor is a voltage-type all-control device and requires a special drive circuit to turn it on and off. Non-quarantine bootstrap drive chips may be selected because the overall system voltage is lower.

The system communication circuit includes two channels of quarantine controller area network (CAN) communication, two channels of quarantine 485 communication, two channels of quarantine input dry contact, and two channels of quarantine output dry contact. The input dry contact, i.e., DI in the figure, and the output dry contact, i.e., DO in the figure are mainly used for external communication.

It will be appreciated that other parts of the active equalizer may be flexibly set as desired, and the present application is not limited thereto.

In conclusion, the quarantine scheme is adopted in the whole system, and compared with the non-quarantine scheme, the operation safety of the system may be effectively ensured, and direct quarantine energy scheduling between any batteries may be realized. The whole system may operate independently of the BMS, and may independently control the direct energy scheduling between any batteries, and may be used in conjunction with the BMS. When the system and the BMS cooperate, the sampling circuit in the system may be omitted, and the BMS transmits the battery data to the system through communication. Moreover, the system does not need to always detect the voltage of the batteries, and automatic voltage equalization between the batteries may be realized through open-loop.

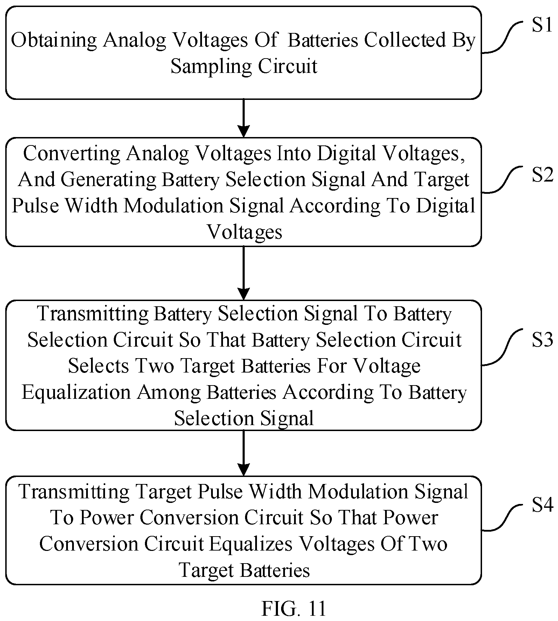

FIG. 11 shows a flowchart of an active equalization control method according to some embodiments of the present application. As shown in FIG. 11, the active equalization control method is applied to the active equalization control system, and includes:
Step S1: obtaining a plurality of analog voltages of the plurality of batteries collected by the sampling circuit;
Step S2: converting the plurality of received analog voltages into the plurality of digital voltages, and generating a battery selection signal and a target pulse width modulation signal according to the plurality of digital voltages;
Step S3: transmitting the battery selection signal to the battery selection circuit so that the battery selection circuit selects two target batteries to be voltage equalized among the plurality of batteries according to the battery selection signal; and
Step S4: transmitting the target pulse width modulation signal to the power conversion circuit so that the power conversion circuit equalizes the voltages of the two target batteries.

Further, before transmitting the target pulse width modulation signal to the power conversion circuit, the active equalization control method further includes:
Step S40: adjusting the duty ratio of the target pulse width modulation signal to 50%.

Optionally, Step S40 is performed after Step S3 and before Step S4. As can be seen from the above-mentioned active equalization control method, the active equalization control method makes the control of the entire equalization system simpler, without complicated algorithm processing and a large amount of data to be processed. During the intermediate process, the software is not required to monitor the voltage of the battery at all times, and there is no deed for the closed-loop control, and only needs to generate a 50% duty cycle of the PWM signal.

For specific details of the active equalization control method, reference may be made to the related description of the active equalization control system, and details are not described.

The active equalization control method may be executed by the processor. The memory is configured to store one or more programs that, when executed by the processor, cause the processor to implement the active equalization control method.

Further, the present application provides a computer readable medium having stored thereon a computer program which, when executed by a processor, implements the active equalization control method.

In summary, some embodiments of the present application achieve voltage equalization by sending the target pulse width modulation signal to the power conversion circuit, so that the entire equalization system may be easily controlled without the complex algorithm processing and a large amount of data to be processed, During the intermediate process, the software is not required to monitor the voltage of the battery at all times, the equalization may be achieved by open loop, the closed loop control is not required, and the equalization efficiency is improved.

In the above-mentioned embodiments, the description of each embodiment has its own emphasis, and parts not described in detail in a certain embodiment may be referred to the related description of other embodiments.

## Claims

1. An active equalization control system, **characterized in that** the active equalization control system includes a battery module and an active equalizer electrically connected to the battery module, the battery module includes a plurality of batteries (BAT1-BATn), and the active equalizer includes:
a sampling circuit electrically connected to the plurality of batteries (BAT1-BATn) and configured to collect a plurality of analog voltages of the plurality of batteries (BAT1-BATn);
a processor electrically connected to the sampling circuit and configured to convert the plurality of analog voltages received from the sampling circuit into a plurality of digital voltages, and generate a battery selection signal and a target pulse width modulation signal according to the plurality of digital voltages; and
an active equalization circuit electrically connected to the processor, wherein the active equalization circuit includes:
a battery selection circuit electrically connected to the plurality of batteries (BAT1-BATn) and configured to select two target batteries (BAT1, BAT2) for voltage equalization among the plurality of batteries (BAT1-BATn) according to the battery selection signal; and
a power conversion circuit electrically connected to the processor and the two target batteries (BAT1, BAT2), wherein the power conversion circuit is provided with at least four transistors and configured to equalize voltages of the two target batteries (BAT1, BAT2) according to the target pulse width modulation signal.

2. The active equalization control system of claim 1, **characterized in that** the two target batteries (BAT1, BAT2) include a first target battery (BAT1) and a second target battery (BAT2), the power conversion circuit includes:
a power input unit electrically connected to the first target battery (BAT1), connected in series to a primary side of a transformer (T1), and configured to generate a primary side voltage at the primary side of the transformer (T1) according to the target pulse width modulation signal, wherein at least two transistors (S1_1, S1_2) are arranged in the power input unit;
a transformer (T1) including the primary side and a secondary side and configured to generate a secondary side voltage according to the primary side voltage; and
a power output unit electrically connected to the second target battery (BAT2), connected in series to the secondary side of the transformer (T1), and configured to charge the second target battery (BAT2) according to the secondary side voltage, to equalize the voltage of the second target battery (BAT2) and the voltage of the first target battery (BAT1), wherein at least two transistors (S2_1, S2_2) are arranged in the power output unit,
the at least two transistors (S2_1, S2_2) in the power output unit and the at least two transistors (S1_1, S1_2) in the power input unit are both electrically connected to the processor, and the at least two transistors (S2_1, S2_2) in the power output unit are different from the at least two transistors (S1_1, S1_2) in the power input unit.

3. The active equalization control system according to claim 2, **characterized in that** the number of transistors in the power conversion circuit is four, wherein two transistors (S1_1, S1_2) of the transistors in the power input unit are electrically connected to positive and negative electrodes of the first target battery (BAT1), respectively, and other two transistors (S1_1, S1_2) of the transistors in the power output unit are electrically connected to positive and negative electrodes of the second target battery (BAT2), respectively.

4. The active equalization control system according to claim 2, **characterized in that** a ratio of turns of the primary side to turns of the secondary side is 1: 1.

5. The active equalization control system according to claim 2, **characterized in that** the power input unit includes:
a first transistor (S1_1) having a first terminal electrically connected to the processor and a third terminal electrically connected to a first positive bus (BUS1+) of the first target battery (BAT1);
a second transistor (S1_2) having a first terminal electrically connected to the processor, a second terminal electrically connected to a first negative bus (BUS 1-) of the first target battery (BAT1), and a third terminal electrically connected to a second terminal of the first transistor (S1_1); and
a first capacitor (C1_1) having a first terminal electrically connected to the second terminal of the first transistor (S1_1) and a second terminal electrically connected to the primary side of the transformer (T1).

6. The active equalization control system according to claim 5, **characterized in that** the power input unit further includes:
a second capacitor (C1_2) having a first terminal electrically connected to the first positive bus (BUS1+) and a second terminal electrically connected to the first negative bus (BUS 1-); and
a third capacitor (C1_3) having a first terminal electrically connected to the first positive bus (BUS1+) and a second terminal electrically connected to the first negative bus (BUS 1-).

7. The active equalization control system according to claim 5, **characterized in that** the power output unit includes:
a third transistor (S2_1) having a first terminal electrically connected to the processor and a third terminal electrically connected to a second positive bus (BUS2+) of the second target battery (BAT2);
a fourth transistor (S2_2) having a first terminal electrically connected to the processor, a second terminal electrically connected to a second negative bus (BUS2-) of the second target battery (BAT2), and a third terminal electrically connected to a second terminal of the third transistor (S2_1); and
a fourth capacitor (C2_1) having a first terminal electrically connected to the second terminal of the third transistor (S2_1) and a second terminal electrically connected to the secondary side of the transformer (T1).

8. The active equalization control system according to claim 7, **characterized in that** the power output unit further includes:
a fifth capacitor (C2_2) having a first terminal electrically connected to the second positive bus (BUS2+) and a second terminal electrically connected to the second negative bus (BUS2-); and
a sixth capacitor (C2_3) having a first terminal electrically connected to the second positive bus (BUS2+) and a second terminal electrically connected to the second negative bus (BUS2-).

9. The active equalization control system according to claim 7, **characterized in that** the battery selection circuit includes a plurality of switching transistors (Q11p-Qn1p, Q12p-Qn2p, Q13p-Qn3p, Q14p-Qn4p, Q11n-Qn1n, Q12n-Qn2n, Q13n-Qn3n, Q14n-Qn4n), wherein at least one of the plurality of switching transistors (Q11p-Qn1p, Q12p-Qn2p, Q13p-Qn3p, Q14p-Qn4p, Q11n-Qn1n, Q12n-Qn2n, Q13n-Qn3n, Q14n-Qn4n) is disposed between the plurality of batteries (BAT1-BATn) and each of the first positive bus (BUS1+), the first negative bus (BUS1-), the second positive bus (BUS2+), and the second negative bus (BUS2-).

10. The active equalization control system according to any of claims 1-9, **characterized in that** the processor is provided with a pulse width modulation unit configured to generate the target pulse width modulation signal, and the active equalizer further includes an interlock circuit electrically connected to the pulse width modulation unit to prevent shoot-through of the at least four transistors of the power conversion circuit.

11. The active equalization control system according to any of claims 1-9, **characterized in that** an analog-to-digital conversion unit is provided in the processor, the active equalizer further includes an analog selector electrically connected to the sampling circuit and the analog-to-digital conversion unit, and the analog selector is configured to convert the plurality of analog voltages into the plurality of digital voltages.

12. The active equalization control system according to any one of claims 1 to 9, **characterized in that** the active equalization machine further includes an auxiliary power circuit electrically connected to the processor and at least one of the plurality of batteries (BAT 1-BATn) to supply power to the processor.

13. An active equalization control method applied to the active equalization control system according to any one of claims 1 to 12, **characterized in that** the active equalization control method includes:
obtaining the plurality of analog voltages of the plurality of batteries (BAT1-BATn) collected by the sampling circuit (S1);
converting the plurality of analog voltages into the plurality of digital voltages, and generating the battery selection signal and the target pulse width modulation signal according to the plurality of digital voltages (S2);
transmitting the battery selection signal to the battery selection circuit so that the battery selection circuit selects the two target batteries (BAT1, BAT2) for the voltage equalization among the plurality of batteries (BAT1-BATn) according to the battery selection signal (S3); and
transmitting (S4) the target pulse width modulation signal to the power conversion circuit so that the power conversion circuit equalizes the voltages of the two target batteries (BAT1, BAT2).

14. The active equalization control method according to claim 13, **characterized in that** the active equalization control method further includes: before transmitting the target pulse width modulation signal to the power conversion circuit,
adjusting (S40) a duty ratio of the target pulse width modulation signal to 50%.
